# EUROPEAN PATENT SPECIFICATION

(11) **EP 3 963 034 B1**
(45) Date of publication and mention of the grant of the patent: **18.03.2026**
(21) Application number: 20721620.1
(22) Date of filing: 30.04.2020
(51) Int. Cl.: C11B 11/00

(54) **EXTRACTING AND REFINING PLANT CUTICULAR WAXES FROM AQUEOUS DISPERSION USING A CAPTURING AGENT**
EXTRAKTION UND VEREDELUNG PFLANZLICHER KUTIKULÄRER WACHSE AUS WÄSSRIGER DISPERSION UNTER VERWENDUNG EINES EINFANGMITTELS
EXTRACTION ET RAFFINAGE DE CIRES CUTICULAIRES VÉGÉTALES À PARTIR D'UNE DISPERSION AQUEUSE À L'AIDE D'UN AGENT DE CAPTURE

(30) Priority: 30.04.2019 EP 19171900
(43) Date of publication of application: 09.03.2022
(73) Proprietor: Jena Trading ApS, 4270 Høng (DK)
(72) Inventor: VINTHER, Per, 4270 Høng (DK); LAWTHER, John Mark, 4000 Roskilde (DK)
(74) Representative: Guardian IP Consulting I/S
(86) International application number: PCT/EP2020/062075
(87) International publication number: WO 2020/221878

(56) References cited:
- WO-A1-2015/185685
- US-A- 1 309 999
- US-A- 2 781 336
- US-A- 3 006 938
- AZZAM A. M.: "Separation and Analysis of Wax from Egyptian Sugar Cane Filter Press Cake", FETTE-SEIFEN-ANSTRICHMITTEL, vol. 86, no. 6, 1 January 1984 (1984-01-01), DE, pages 247 - 250, XP93068155, ISSN: 0015-038X, Retrieved from the Internet <URL:https://onlinelibrary.wiley.com/doi/pdf/10.1002/lipi.19840860610> DOI: 10.1002/lipi.19840860610

## Description

### FIELD OF THE INVENTION

The present invention concerns a method of extracting and refining cuticular wax from plant material.

### BACKGROUND OF THE INVENTION

Plant waxes are provided typically from two different processes, the first being as a by-product from vegetable oil production, to which group waxes such as soy wax, rape seed wax, cotton seed stearin, rice bran wax, and palm wax belong, and the second process of more or less artisanal production of natural waxes such as Candellila wax, Carnauba wax, and Ouricury wax. Also wax products such as Jojoba wax or Castor wax are commercially available. Other commercially relevant wax sources are montan wax, bees wax, lanolin, synthetic wax, and paraffin waxes, the latter being by far the largest by volume, originated as a by-product from petrochemical refining.

Vegetable oil originating waxes are often used in candle production as they are characterized by a medium/low melting point and therefore less suitable for more demanding applications requiring thermal resistance and also shine/gloss - as for example car wax, boat wax, and cosmetics. These characteristics are met by paraffin waxes and synthetic waxes, supplemented with the "premium" natural waxes Carnauba or Candelilla wax.

The mineral/fossil waxes represent approximately 75% of global wax production, with synthetic waxes accounting for further 20%, a total of 95%. The remaining waxes make up less than 5% of global production, and this scarcity is a major barrier against increased use of natural waxes.

With increased interest in fossil-free ingredients and materials, there is a significant demand also for wax produced from renewable sources. The natural waxes are as mentioned above scarce, in fact, the availability of such waxes is far from enough to substitute paraffin, and attempts to increase farming of the plants supplying Candellila (Euphorbia antisyphilitica), Carnauba (Copernicia prunifera), and Ouricury (Syagrus coronata) wax has so far been unsuccessful; and over-exploitation of sources such as the Candelilla shrub is leading to further shortages of in demand natural waxes.

When supply is limited, security of supply for large volume applications, like cosmetics, paint, polish, becomes a problem. To overcome this problem a natural wax has to be abundant and provide acceptable quality, defined for example by its melting point, hardness, and/or color.

Extraction of wax from lignocellulosic plant material, such as bark, has previously been described (US2781336), where wax is extracted using benzene - a volatile, explosive, toxic, and flammable hydrocarbon.

It has previously been shown that wax can be extracted from numerous plants, including cereals, grasses, etc (WO 2015/185685). As an example, wheat straw has a wax content of 1 - 3%. Annual global wheat production exceeds 700 million ton, bringing an estimate 3-400 million ton of straw. The global potential supply of wheat straw wax could therefore be 3-9 million ton, which is magnitudes more that the current supply of natural waxes. Expanding that to other common agricultural crops, there is a large potential to utilize a harvest waste product and further to fulfill the supply demand of industries that wish to introduce larger quantities of natural waxes into their product lines. Although the agricultural base is there to provide abundant quantities of wax, the very low wax content in the plant biomass and subsequent dilution in the extraction process, makes it very difficult to recover the wax at reasonable yields with conventional techniques, without resolving to solvent extraction methodologies.

The present invention concerns a method of refining wax from common agricultural plant material, such as cereal straw.

Previously described methods to dewax plant material by combination of mechanical, thermal, and enzymatic methods have in common that an aqueous liquid is added together with enzymes during the dewaxing process. The released wax is thus diluted, dissolved, suspended or otherwise present in a larger volume, hence at lower concentrations. If e.g. a straw slurry of 20% dry matter (DM) is used, the 1% wax in straw becomes a 0.2% wax in aqueous slurry.

Current main refining tool for natural waxes such as bees wax, carnauba wax and candelilla wax is filtration of molten wax (usually kept below 100°C), using an industrial filter press. As an example, with Carnauba wax, filtration, centrifugation and bleaching are usually performed: the crude wax is boiled in water, followed by filtration and separation of the wax from the water. The isolated wax from this is then melted and filtered again. As another example, with Candelilla wax, the wax is melted and then filtered through a suitable matrix such as "Fullers Earth" ("bleaching earth") or active carbon; and/or it can optionally be further bleached using hydrogen peroxide. As yet another example, with beeswax, simple melting and filtration is performed.

Depending on the application of the extracted wax, wax color may be of high relevance - e.g. in cosmetics. In order to compare the color of waxes, the Gardner color method may be employed. The Gardner color scale is a range from 1 (white) to 18 (dark brown). As seen in table 1, cereal straw waxes traditionally appear darker compared to the refined commercial waxes.

**Table 1. Gardner color for commercial and cereal waxes¹**

| **Type of wax** | Gardner color |
|---|---|
| **Commercial waxes** | |
| Lanolin | 9 |
| Beeswax | 3 |
| Candellila wax | 9 |
| Carnauba wax | 9 |

| **Cereal straw waxes** | |
|---|---|
| Wheat straw wax | 18 |
| Barley straw wax | >18 |
| Oat straw wax | >18 |

| | |
|---|---|
| ¹Sin E. H. K. 2012. PhD thesis: The extraction and fractionation of waxes from biomass, University of York. | |

The present invention provides an improved method for refining natural waxes, a method which overcomes the difficulties of isolating a product in low concentration and provides a highly pure wax product compared to current refining tools used for natural waxes.

### SUMMARY OF THE INVENTION

The invention concerns a method of extracting and refining cuticular wax from plant material, said method comprising the steps of
a. providing plant material comprising cuticular wax,
b. disassociating cuticular wax from said plant material provided in step (a), thereby obtaining a sample comprising plant derived cuticular wax and dewaxed plant material in an aqueous suspension,
c. solubilizing said plant derived cuticular wax by increasing the temperature of the sample obtained in step (b) to a temperature greater than the melting point of said plant derived cuticular wax ,
d. separating the suspension obtained in step (c) into a solid fraction and a liquid fraction, wherein said liquid fraction comprises melted plant derived cuticular wax,
e. mixing said liquid fraction from step (d) with a capturing agent, wherein said capturing agent is a non-water miscible liquid in which said plant derived cuticular wax is soluble,
f. separating the mixture obtained in step (e) into an aqueous fraction and a capture fraction, wherein said capture faction comprises said capturing agent and said plant derived cuticular wax,
g. recovering said plant derived cuticular wax from said capture fraction from step (f)
wherein the capturing agent is characterized by (i) being a non-water miscible liquid in which said plant derived cuticular wax is soluble, (ii) having a boiling point above 85°C at ambient pressure, and (iii) being a C1-C4 alcohol-miscible liquid.

### BRIEF DESCRIPTION OF THE FIGURES

**Figure 1****:** a flow chart outlining different process steps of the invention, as described in example 1
**Figure 2****:** a GC chromatogram of chloroform extracted wheat straw; peaks before 7.5 mins are fatty acids (mainly C16 and C18), peaks at 9.5- 12.5 mins are mainly alkanes, aldehydes, and fatty alcohol, peaks from 14- 17.5 mins are mainly sterols, and beta-diketone, while peaks after 18 mins are waxy esters.
**Figure 3****:** a GC chromatogram of the wax product prepared in example 1.2; peaks before 7.5 mins mainly represent residual capturing agent.
**Figure 4****:** a GC chromatogram of the wax product prepared in example 1.3; peaks before 7.5 mins mainly represent residual capturing agent.
**Figure 5****:** a GC chromatogram of the wax product prepared in example 1.4.

### DETAILED DESCRIPTION OF THE INVENTION

### Definitions

"Capturing agent" (abbreviated CA) means a liquid having the following properties: (i) it is a non-water miscible liquid, (ii) wax is soluble in the capturing agent, such as a liquid solvent for all components of natural waxes, (iii) it is a C1-C4 alcohol-miscible liquid.

"Dewaxed plant material" means plant material which has been treated in a way that removes/disassociates cuticular wax from the plant material, such as more than 50, 55, 60, 65, 70, 75, 80, 85, 90%, or even more than 95% of all plant wax has been removed, wherein the wax content is determined by the method provided in section II of this application.

"Plant or lignocellulosic material" or "plant or lignocellulosic biomass" means a wide and varied group of plant parts from many species.. The terms plant and lignocellulosic material are used interchangeably. Plant material that may be used as starting material in the present invention comes from multicellular, macroscopic plants comprising stem and leaves which are (at least one of them) sheathed by an outer layer or epidermis that is coated with a waxy waterproof protective layer, which is punctuated by specialized pores, known as stomata, which regulate gas and water exchange.

"Cereal straw" means the stems and leaves of the cereal plant remaining after harvest of the cereal grains. "Wax" or "wax components" means all various forms of wax coated on the surface of the plant material. It is collectively used to describe the waxy components of cuticles (cuticular wax) covering the areal parts of plants, including wax at the surface of the plant (epicuticular wax) as well as wax just below the surface of the plant (intracuticular wax). Wax comprises linear very-long chain (VLC) compounds, including varying ratios of fatty acids, primary and secondary alcohols, esters, aldehydes, free fatty acids, alkanes, and ketones. In addition, cyclic compounds such as pentacyclic triterpenoids, alkylresorcinols, sterols, and steryl esters occur in the wax of many species. Lipids making up plant cell walls in macroscopic or in microscopic (unicellular) plants are not considered "wax" as such in the present context, but may be present in a small amount in the final wax product if liberated during the mechanical and/or enzymatic treatment.

### The invention

The present invention concerns refining of cuticular wax from plant material

### I. Method of refining wax

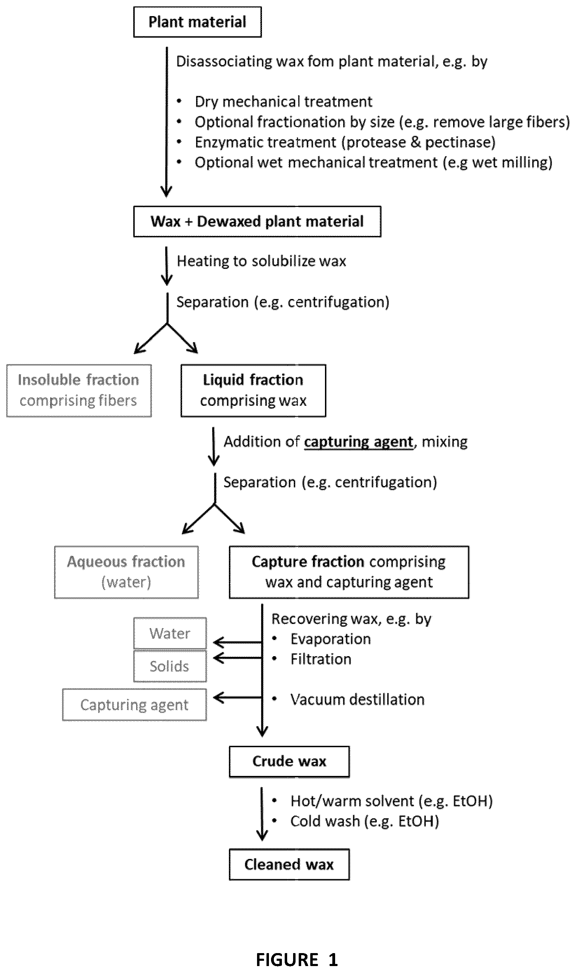

Figure 1 provides an in illustrative example of the present invention, outlining the different process steps to arrive at the desired products. All process steps may be performed as illustrated, some steps may be left out, some steps may be combined, and additional steps may be added. A detailed description is given in the following sections.

The present invention concerns a method of refining cuticular wax from plant material, yielding an improved wax product with desired properties for further downstream processing. In a preferred embodiment, the present invention provides a method of refining wax, comprising the steps of:
(a) providing plant material comprising cuticular wax,
(b) disassociating said cuticular wax from said plant material provided in step (a), thereby obtaining a sample comprising plant derived cuticular wax and dewaxed plant material in an aqueous suspension,
(c) solubilizing said plant derived cuticular wax by increasing the temperature of the sample obtained in step (b) to a temperature greater than the melting point of said plant derived cuticular wax,
(d) separating the sample obtained in step (c) into a solid fraction and a liquid fraction, wherein said liquid fraction comprises melted plant derived cuticular wax,
(e) mixing said liquid fraction from step (d) with a capturing agent, wherein said capturing agent is a non-water miscible liquid in which said plant derived cuticular wax is soluble,
(f) separating the mixture obtained in step (e) into an aqueous fraction and a capture fraction, wherein said capture fraction comprises said capturing agent and said plant derived cuticular wax,
(g) recovering said plant derived cuticular wax from said capture fraction from step (f),
wherein said capturing agent is characterized by (i) being a non-water miscible liquid in which said plant derived cuticular wax is soluble, (ii) having a boiling point above 85°C at ambient pressure, and (iii) being a C1-C4 alcohol-miscible liquid.

In another embodiment, the present invention provides a method as described above in steps (a)-(g), further comprising the step of:
(h) bleaching said plant derived cuticular wax recovered in step (g).

In yet another embodiment, the present invention provides a method as described above in steps (a)-(g), optionally including step (h), further comprising the step of:
(i) formulating said plant derived wax recovered in step (g) or said bleached wax obtained in step (h) into valuable products.

**According to step (a)** of the method of the present invention, plant material comprising cuticular wax is provided. In one embodiment of the invention, the plant material originates from agricultural crops such as cereals, sugar cane, palm trees, high energy grasses. In a preferred embodiment, the dewaxed lignocellulosic material of the invention originates from cereal, selected from the group consisting of wheat, rye, barley, oats, sorghum, rice, triticale, etc. and combinations thereof. In another embodiment the dewaxed lignocellulosic material of the invention originates from a high energy grass such as *Miscanthus.* The plant material may be provided in different form, such as untreated natural plant material, or processed such as in the form of e.g. pellets.

In one embodiment, cereal straws and grasses, rapeseed straw, maize stems, carnauba wax yielding plants (e.g. Copernicia prunifera, Copernicia cerifera), candelilla wax yielding plants (e.g. Euphorbia antisyphilica, the candelilla plant) or cactus are preferred plants for extracting and reefing waxes by the present invention. Further pineapple leaves and banana leaves. In fact most known wax bearing leaves are excellent sources of plant material for the method of the present invention. In a preferred embodiment, the dewaxed lignocellulosic material of the invention originates from cereal straw, selected from the group consisting of wheat, rye, barley, oats, sorghum, rice, triticale, etc. and combinations thereof; most preferably from wheat straw. Such cereal straws are the stems and leaves of the plant remaining after harvest of the cereal grains.

**According to step (b)** of the method of the present invention, wax is disassociated from the plant material provided in step (a), thereby obtaining a sample comprising plant derived wax and dewaxed plant material in an aqueous suspension. In one embodiment, plant material has in step (b) been treated in a way whereby more than 50% of the wax has been disassociated with the remaining plant material, such as treated in a way providing a sample comprising plant derived wax and dewaxed plant material, wherein more than 55, 60, 65, 70, 75, 80, 85, 90%, or even more than 95% of the wax in the original plant material has been disassociated from the plant material, yet is still present in the sample.

Wax may in step (b) be disassociated from the plant material by any known method in the art, such as by mechanically stripping the wax from the surfaces or even by hydrothermal and wet oxidation pretreatment.

In one embodiment, wax is disassociated from plant material by a mechanical method. In another embodiment, wax is disassociated from plant material by enzymatic treatment using enzymes suitable for degrading proteins associated with the cuticular wax in the plant material. In a preferred embodiment, wax is disassociated from plant material by a method using a combination of mechanical and enzymatic treatment, wherein the enzymatic treatment is facilitated by enzymes suitable for degrading proteins associated with the wax in the plant material. A similar method of dewaxing plant material is described in WO 2015/185685.

In one embodiment, the plant material is subjected to a dry mechanical treatment. Thus, in one embodiment of the present invention the dry mechanical treatment comprises cutting, chopping, and/or crushing, such as a mechanical treatment is selected from the group consisting of shredding, hammer milling, disc milling grinding and combinations thereof. In some embodiments, the plant material may need to be dried prior to the dry mechanical treatment. As part of the dry mechanical treatment, the plant material may be cut in lengths suitable for a subsequent treatment in a suitable mill for deforming the plant material. The primary chopping may results in cuts between about 5 and 20 cm in length, between 5 and 15 cm, or between 5 and 10 cm in length. The milling further minces the plant material to pieces of less than 5 cm in length, less than 3 cm, less than 2 cm, or less than 1 cm. The processes equipment can be adjusted to optimize the sizes of the plant material according to the downstream use of the mechanically treated plant material.

The dry mechanical treatment may serve to deform the outer surface of the plant material, preferably after drying, so that the wax coating is cracked and released, obtaining a partly dewaxed plant material, and to open the plant material surface to help facilitate penetration of water during subsequent wet-processing.

The material obtained after dry mechanical treatment is optionally fractionated by size. In one embodiment of the present invention, fractionation is done by a sieving treatment in order to obtain two fractions, the first fraction passing through the sieve mesh and the second fraction being retained by the sieve mesh. The mesh size of such sieve is in the range of 2-12 mm, such as in the range from 4-10 mm e.g. in the range from 6-8 mm. In a preferred embodiment, the mesh size is 8 mm. The sieving treatment may comprise one or more sieves having the same or different mesh sizes. The sieving treatment may be performed in order to separate a fraction enriched in cracked and released wax (the first fraction passing through the sieve) from a fraction of partly dewaxed plant material (the second fraction retained by the sieve).

In one embodiment, the dry mechanically treated material or a selected fraction of the dry mechanically treated material is suspended in an aqueous solution comprising one or more protease and/or pectinase enzymes, and the temperature and pH are preferably adjusted to optimize the activity of the enzyme(s) added.

Proteases are involved in digesting long protein chains into shorter fragments by splitting the peptide bonds that link amino acid residues. In one embodiment, the proteases may be selected among proteases which detach the terminal amino acids from the protein chain (exopeptidases, such as aminopeptidases, carboxypeptidase A). In another embodiment, proteases may be selected among pectinases which attack internal peptide bonds of a protein (endopeptidases, such as trypsin, chymotrypsin, pepsin, papain, elastase); or from the group consisting of serine proteases, threonine proteases, cysteine proteases, aspartate proteases, glutamic acid proteases and metalloproteases. In yet another embodiment the proteases may be selected from commercially available proteases, such as selected from the group consisting of Alcalase^{®}, (a protease from Bacillus licheniformis) Neutrase^{®} (a protease from Bacillus amyloliquefaciens, both being available from Novozymes, Denmark) and Promod^{®} (a protease from Ananas comosus, available from BioCatalysts, UK). In yet another embodiment, a combination of two or more protease enzymes or commercial protease enzyme products may be used for degrading the plant proteins.

Pectinases are involved in breaking down pectin, a polysaccharide found in plant cell walls, wherein e.g. cellulose fibrils are often embedded. In one embodiment, the pectinases may be selected from a group consisting of (I) pectin hydrolases which hydrolyse the pectic acid backbone in pectins (endopolygalacturonase, EC 3.2.1.15; exopolygalacturonase, EC 3.2.1.67), (II) pectin lyases which degrade pectic acid via elimination rections (endopolygalacturonase lyase, EC 4.2.2.2; exopolygalacturonase lyase, EC 4.2.2.9; endopolymethyl-d-galactosiduronate lyase, EC 4.2.2.10), and (III) pectin esterase, which cleave the methyl ester bond (pectin methyl esterase, EC 3.1.1.11). Pectinases are widely available commercially and most are blends which incorporate all three mentioned enzyme types. In another embodiment, the pectinases may be selected from a group consisting of Pectinex^{®} (a mix of pectinases from Aspergillus Niger, available from Novozymes, Denmark) and Pectinase 947 L^{®} (a pectinase mix available from BioCatalysts, UK; Pektozyme, a range of Pectin active enzyme blends supplied by DuPont). In yet another embodiment, a combination of two or more pectinase enzymes or commercial pectinase enzyme products may be used for degrading the plant pectins.

A combination of two or more protease(s) and/or pectinase(s) and/or commercial protease product(s) and/or commercial pectinase product(s) may be applied for degrading the plant proteins and / or pectins.

In an embodiment the one or more enzymes may be added to the mixture to obtain an enzyme concentration in the range from 0.01-2% w/w, such as in the range of 0.03-1.8% w/w, e.g. in the range of 0.05-1.6% w/w, such as in the range of 0.07-1.4% w/w, e.g. in the range of 0.09-1.2% w/w. The enzyme concentration depend on the enzyme activity however, it may be preferred that the enzyme concentration in the mixture is 1-2% w/w. In one embodiment of the present invention it may be preferred that the enzyme activity is in the range from 1000-12000 U/g, such as in the range of 2000-10000 U/g, e.g. in the range of 3000-9000 U/g, such as in the range of 4000-8000 U/g, e.g. in the range of 5000-7000 U/g.

In order to benefit as much as possible from the enzyme treatment, the conditions for enzyme activity, such as temperature, pH, salt concentration, etc., should be optimized with respect to the enzyme(s) used. Addition of acid or base to the slurry/mixture may be necessary to reach optimal pH conditions.

Optimal temperature during enzyme treatment is selected to suit the enzyme(s) used. The temperature may be 25, 30, 35, 40, 45, 50 °C or even higher if thermostable enzymes are used. In one embodiment, the temperature during enzyme treatment is adjusted in the range of 30-70°C, such as in the range of 35-65°C, e.g. in the range of 40-60°C, e.g. in the range of 45-55°C, preferably in the range of 45-65 °c, most preferably in the range of 50-60 °C to optimize the activity of the enzymes used in performing targeted hydrolysis of cell wall components.

In a further embodiment, the pH during enzyme treatment is in the range of 3.5-7.0, such as in the range of 4.0-7.0, e.g. in the range of 4.0-6.0, preferably in the range 4.5-6.0 to optimize the activity of the enzymes used in performing targeted hydrolysis of cell wall components. The pH may be adjusted by adding at least one acid and/or buffer selected from the group consisting of phosphoric acid, hydrochloric acid, sulfuric acid, phosphate buffers, acetate buffers, and combinations thereof. In a preferred embodiment the acid is phosphoric acid.

In order to obtain an optimal exposure of the biomass components to the enzymes, agitation is preferably applied and may be selected from the group consisting of stirring and/or compressed air or gas bubbling agitation and/or vessel-shaking. Applicable stirrers may be selected from the group consisting of anchor stirrers, blade stirrers, K-stirrers, paddle stirrers or any combinations thereof.

In a preferred embodiment the hydrolysis under agitation is performed for 0.5-5.0 hours such as in the range of 0.5-4.0 hours, e.g. in the range of 0.5-3.0 hours, e.g. in the range of 1.0-2.5 hours, e.g. in the range of 1.0-2.0 hours, e.g. preferably in the range of 1.0-1.5 hours, preferably for 1.5 hours.

The dry mechanically and enzymatically treated material may be subjected to a wet mechanical treatment. The wet mechanical treatment may be simultaneous with the enzyme treatment, periodically/intermittently during the enzymatic treatment, or a subsequent mechanical treatment. In an embodiment of the invention, the wet mechanical treatment is selected from the group consisting of conical refiners, disc type refiners, atmospheric refiners, pressurized refiners and combinations thereof; or wet milling such as toothed colloid mill. Such wet refining or milling may be repeated as many times as desired: 1, 2, 3 or 4 repetitions will normally suffice. Alternatively, or additionally, very powerful stirring may be applied.

In a preferred embodiment of the present invention, the disassociation of cuticular wax from plant material in step (b) for obtaining a sample comprising plant derived curticular wax and dewaxed plant material is carried out by a method comprising the step of:
(i) subjecting the plant material to a dry mechanical treatment,
(ii) optionally fractionating the material obtained in step (i) by size,
(iii) suspending the material obtained in step (i) or a selected fraction obtained in step (ii) in an aqueous liquid comprising one or more protease and/or pectinase enzymes,
(iv) optionally subjecting the mixture obtained in step (iii) to wet mechanical treatment,

**According to step (c)** of the method of the present invention, the temperature of the aqueous sample obtained in step (b) is increased to solubilize the plant derived wax. The temperature is increased in order to melt and liquefy the wax, such that the dewaxed plant material and other solids can be separated from a liquid part comprising water, water-soluble plant material and the melted waxes. The wax may be fully or partly liquefied dependent on the composition of the wax and the temperature.

Table 2 provides the melting temperature of a wide variety of waxes. In a preferred embodiment of the invention, the temperature is increased to a temperature greater than the melting point of the plant derived wax in question based on its origin as specified by table 2.

**Table 2. Melting temperature of waxes**

| **Type of wax** | **Source** | **Melting point (°C)** |
|---|---|---|
| **Animal and insect wax** | | |
| Bees wax | Bees | 62-64 |
| Lanolin | Sheep/wool | 36-42 |
| Spermaceti | Sperm whale skull | 42-50 |

| **Plant waxes** | | |
|---|---|---|
| Candellila | Euphorbia cerifera | 68-72 |
| Carnauba | Copenicia cerifolia | 82-86 |
| Castor | Hydrogenated oil from Ricinus communis | 82 |
| Cotton Stearin | Cotton Seed | 68-71 |
| Jojoba | Hydrogenated oil Simmondsia californica | 60-70 |
| Ouricury | Syagrus coronata (palm) | 81-84 |
| Palm oil wax | Vegetable oil byproduct | 52-60 |
| Rape seed wax | Vegetable oil byproduct | 36-39 |
| Rice bran wax | Rice bran oil byproduct | 77-86 |
| Soy | Vegetable oil byproduct | 56-60 |
| Wheat straw wax | | ≈ 64 |
| Barley straw wax | | ≈ 65 |
| Oat straw wax | | ≈ 64 |

| **Mineral/ fossil waxes** | | |
|---|---|---|
| Montan | Lignite / Coal | 84-90 |
| Petrolatum | Paraffin | 63 |
| Microcrystalline Slack wax | Paraffin | 49 |
| Microcrystalline | Paraffin | 58 |
| Petrolatum | | |

| **Synthetic** | | |
|---|---|---|
| Polyethylene wax | Ethylene | various |
| Fischer Tropsch | Straight chain hydrocarbons from syngas | various |
| Synthetic Ester waxes | Fatty acid + fatty alcohol synthesis | various |

In one embodiment, the temperature of the suspension obtained in step (b) is increased to 60-90°C, such as in the range from 65-90°C, e.g. in the range from 67-85°C, such as in the range from 75-85°C and preferably to 80°C. In one embodiment, the temperature of the sample obtained in step (b) is increased to above 70°C, preferably above 80, 90 or 95°C.

The temperature may be increased by any standard means of raising the temperature of an aqueous solution. In a preferred embodiment, the temperature of the aqueous sample obtained in step (b) is adjusted by heat exchange, hot water injection, or steam injection, or even a combination thereof.

**According to step (d)** of the method of the present invention, the suspension obtained in step (c) is separated into a solid fraction and liquid fraction comprising melted plant derived wax.

In principle, any known method and device which can be applied to separate a solid fraction from an aqueous suspension may be applied. In one embodiment, the separation in step (d) is performed by a method selected from the group consisting of decanting, centrifugation, and filtration. In another embodiment, removal of the solid dewaxed plant material from the aqueous composition is carried out using a mechanical device selected from the group comprising a centrifuge, a decanter, a filter, a press, or an extruder.

In one embodiment, separation is performed using a centrifuge decanter, yielding a liquid top-phase comprising dissolved solids, including plant derived wax in the form of molten suspension and emulsion droplets, and a fibrous phase comprising residual insoluble dewaxed plant component. In another embodiment, separation may be performed by any form of sieving/filtration, using any molecular size as desired and the filtration device may be selected from small mesh filter, pressurized filter, belt filter, filter press and combinations thereof, similarly resulting in a fibrous dewaxed product and a liquid comprising the plant derived wax.

In one embodiment, the temperature maintained during separation in step (d) is in the range 65-95°C, such as in the range from 65-90°C, e.g. in the range from 75-85°C, such as in the range from 80-85°C and preferably 80°C. In one embodiment, the temperature maintained during separation in step (d) is greater than 70°C, preferably above 80, 90 or 95°C.

The solid fraction comprising fibrous, dewaxed plant material obtained after separation in step (d) has a dry matter content greater than 13%, preferably greater than 23%, even more preferable greater than 33%, most preferably greater than 40%. Additional water may be removed from this fibrous, dewaxed material, such as by using thermal or vacuum drying to increase the dry matter content. The fibrous, dewaxed material may be used as a biofuel. The fibrous, dewaxed plant material may be pelleted or treated in other ways to facilitate easy handling of the material. Or it may be partly of fully suspended in an aqueous solution as a result of a previous treatment, such as the above described.

The liquid fraction comprising plant derived wax is further refined as described in the following steps below.

**According to step (e)** of the method of the present invention, the liquid fraction from step (d) comprising melted cuticular wax is mixed with a capturing agent, characterized by (i) being a non-water miscible liquid in which said plant derived cuticular wax is soluble, (ii) having a boiling point above 85°C at ambient pressure, and (iii) being a C1-C4 alcohol-miscible liquid. The capturing agent is a non-water miscible liquid, in which wax is soluble, such as a liquid solvent for all components of natural waxes. The capturing agent further has the property that it is a C1-C4 alcohol miscible liquid. In one embodiment, the capturing agent is an organic component or a mixture of organic components, such as organic components selected from the group consisting of plant oil, modified plant oil, derivative(s) of vegetable oil, purified or not. In a preferred embodiment, the capturing agent is methyl esters, preferably fatty acid methyl esters, such as rapeseed methyl ester. In a most preferred embodiment, the capturing agent is C10-C18 methyl ester preparations, such as C10, C12, C14, C16, or C18 methyl ester preparations or blends of thereof.

The advantages of fatty acid methyl esters are that they are widely available, non-volatile at ambient and slightly elevated temperatures, but can be distilled off under vacuum at temperatures lower than the decomposition temperature of the wax component. Therefore, in a preferred embodiment, the capturing agent is selected based on its physical/chemical properties, such that the capturing agent is a liquid at the temperature range 0-200°C, such as a liquid in the temperature range 0-100°C, most preferably in the temperature range 10-85°C. In other words, in a most preferred embodiment, the capturing agent has a boiling point above 85°C at ambient pressure. In one embodiment, the capturing agent has a boiling point above 60, 70, 80, 85, 90, 100, 120, 140, 160, 180, or 200 °C at ambient pressure. In yet another embodiment, the capturing agent has a boiling point below 230°C at any pressure ≤ 10 mbar. At temperatures above 210 or 230°C, components of the wax may suffer thermal decomposition. Examples of boiling temperatures at different pressures of relevant capturing agents are given in table 3. In a preferred embodiment, the capturing agent is a blend of C16 and C14 methyl esters.

**Table 3. Boiling point of selected capturing agents**

| **Capturing agent** | **Boiling temperature** |
|---|---|
| Methyl oleate (C18 monounsaturated methyl ester) | 210°C at 10 mm Hg |
| | 218 C at 20 mm Hg |
| | 353°C at ambient pressure |
| Methyl stearate (saturated C18 methyl ester) | 215°C at 10 mm Hg |
| | 443°C at ambient pressure |
| Methyl palmitate (saturated C16 methyl ester) | 164°C at 4mm Hg |
| | 185°C at 10 mm Hg |
| | 417°C at ambient pressure |
| Methyl mysitate (saturate C14 methyl ester) | 160°C a 10mm Hg |
| | 323°C at ambient pressure |

Further, the density of the capturing agent is preferably different from the density of water by more than 2%, such as by more than 10%, preferably by more than 20%.

The capturing agent may be mixed with the liquid fraction from step (e) using a pump, an agitator, a static mixer injection nozzle, or any other standard method of mixing liquids. In one embodiment, the capturing agent and the liquid fraction obtained in step (d) are mixed in a ratio 1:20 to 1:60 (v/v), such as preferably in a ratio 1:40.

In one embodiment, the temperature maintained during mixing in step (e) is in the range 65-95°C, such as in the range from 65-90°C, e.g. in the range from 75-85°C, such as in the range from 80-85°C and preferably 80°C. In one embodiment, the temperature maintained during mixing in step (e) is greater than 70°C, preferably above 80, 90 or 95°C.

The melted cuticular wax from the liquid fraction from step (d) will after mixing with the capturing agent in step (e) be in the capturing agent phase of the mixture. In one embodiment, this step in combination with the following separation of the two phases is a means of up-concentrating the wax.

In a preferred embodiment, the capturing agent is a methyl ester and the capturing agent is mixed with the liquid fraction obtained in step (d) at a ratio 1:40, at a temperature within the range 80-90°C.

**According to step (f)** of the method of the present invention, the mixture obtained in step (e) is separated into an aqueous fraction and a capture fraction comprising capture agent and plant derived cuticular wax. In principle, any known method and device which can be applied to separate two non-miscible liquid solutions may be applied, such as known methods of separating two solutions having different densities.

In one embodiment, the separation in step (f) is performed by centrifugation. The capture fraction (top-phase) comprising capturing agent, wax, and other soluble components, is thereby separated from the aqueous fraction (water). This may be done in a single centrifugation step or done in 2, 3, 4 or even more sequential centrifugations.

In one embodiment, the temperature maintained during separation in step (f) is in the range 65-95°C, such as in the range from 65-90°C, e.g. in the range from 75-85°C, such as in the range from 80-85°C and preferably 80°C. In one embodiment, the temperature maintained during separation in step (f) is greater than 70°C, preferably above 80, 90 or 95°C.

**According to step (g)** of the method of the present inventions, plant derived cuticular wax is recovered from the capture fraction. Wax may be recovered by removing preferably all other components of the capture faction, such as remaining water, solids, as well as capturing agent, from the wax.

In one embodiment, water may be removed from the capture fraction by further treatment, such as evaporation, distillation, membrane separation, molecular adsorption or a combination hereof. As an example, an evaporation chamber may be used, such as by stirring at a temperature of 70-80°C, until an increase in temperature is observed, indicating absence of residual water.

Any separated aqueous fraction may be recycled and reused, such as e.g. heat exchanged with the sample provided in step (b) to increase the temperature as specified in step (c).

In a further embodiment, any solid particles may be removed from the capture fraction, such as by filtration, preferably at a temperature where the wax is in liquid form. This can be an in-line filter or a separate filter, such as in the form of sock, flat bed, belt or band filter onto which the suspension is pumped or poured. Filtration comprises a porous layer or perforated layer, cloth, or a combination hereof, with or without filter-aid. Filter-aid is selected from the group of kiselguhr, diatomeceous earth, carbon, activated carbon, montmorillonite, bentonite, Fuller's earth, clay minerals, cellulose, and perlite. Preferably, a filter band comprising a porous cloth of regenerated cellulose / viscose filter material, or polypropylene filter material, is used.

After separation of water and potentially solid particles from the capture fraction, the liquid capture fraction now mainly comprises plant derived cuticular wax dispersed in the capturing agent.

Capturing agent may be removed from the wax based on the properties of the capturing agent defined in step (e), such as the capturing agent being non-volatile at ambient and slightly elevated temperatures, but e.g. can be distilled off under vacuum at temperatures lower than the decomposition temperature of the waxy components. In one embodiment, the capturing agent is recovered by applying conditions where the capturing agent is volatile, while the waxy components are not, such as vacuum distillation. As an example, the capture fraction comprising capturing agent and wax is placed in a distillation vessel and the capturing agent is then removed via vacuum distillation, yielding crude cuticular wax. In a preferred embodiment, vacuum distillation is performed at a target distillation temperature of 160°C, such as 170°C, preferably up to 180°C; and distillation is complete once the temperature starts to ramp up.

The capturing agent is preferably recycled, such as reused in step (e).

In a further embodiment, residual capturing agent is removed from the crude wax using a suitable solvent. The solvent is a non-water miscible liquid. In one embodiment, the solvent is a C1-C4 alcohol. In a preferred embodiment, the solvent is selected from the group consisting of isomers of methanol, ethanol, propanol, iso-propanol, butanol, iso-butanol, tert-butanol or a combination hereof. Depending on the temperature, the wax may dissolve in the solvent or crystalize and form a precipitate. In a preferred embodiment, ethanol is used as solvent. Hence, in a preferred embodiment, the crude wax is recovered from the distillation vessel as described above (discharged as a melt) and introduced to an excess of ethanol (at least 96% w/v, preferably 99%) during the final cleanup phase.

Two different approaches of removing residual capturing agent can be used:
(I) The crude wax melt is suspended in solvent, selected from the above list, and left for full recrystallization in the solvent, as the temperature is lowered to between 2-25°C, such as preferably lowed to between 10-20°C. The precipitate (wax) is recovered, e.g. by filtration or other means of separating an insoluble faction from a liquid, and may optionally be washed with solvent to remove most of the residual capturing agent.
(II) The crude wax melt is dissolved in hot/boiling solvent, selected from the above list, preferably ethanol. In one embodiment, the temperature of the solvent is above 60°C, such as between 60-79°C, such as preferably between 65-79°C. The temperature is selected such that all components in the crude wax, including the residual capturing agent will dissolve/disperse in the hot solvent. The solution is then cooled to a temperature which leads to the precipitation of most of the waxy components (apart from some fatty acids), whilst the capturing agent remains in solution. In one embodiment, the temperature of the solution is lowered to less than 50°C, such as less than 40, 35, 30, or 25, preferably less than 20°C, such as lowered to between 2-25°C, such as preferably lowed to between 10-20°C. The precipitate is recovered, e.g. by filtration or other means of separating an insoluble faction from a liquid. Finally, the recovered precipitate may optionally be washed with more cold solvent to remove last traces of capturing agent.

Alternative ways of removing residual capturing agent may be known and selected by the skilled person.

In a preferred embodiment, residual capturing agent is removed by approach (II), as described above, and the recovered precipitate is washed with cold solvent to extract last traces of capturing agent, such as by using 2, 4, 6, 8, 10, 12, 15, 20 or even more times excess of solvent to amount of wax precipitate in the washing.

In both approach I and II, solvent may be recovered from the eluent and recycled.

In a further embodiment, residual solvent is removed from the cleaned wax from approach I or II, such as removed by blowing warm air/stream at the wax, effectively evaporating the solvent; or removed by melting at the wax at a temperature which allows the solvent to evaporate, such as a temperature above 75°C, preferably at a temperature in the range 75-100°C, more preferably in the range 80-90°C

**According to step (h)** of the method of the present invention the cuticular wax recovered in step (g) may be bleached. Bleaching is preferably achieved by exposure to a bleaching agent. In one embodiment, the bleaching agent is selected from the group consisting of oxidants such as chlorine, hypochlorite, chloramine, chlorine gas, chlorine dioxide, sodium percarbonate, sodium perborate, molecular oxygen, ozone, peroxoacetic acid, benzoyl peroxide, and bromate. In a preferred embodiment, the wax is bleached using ozone.

Ozone treatment as a means of bleaching is not limited to cuticular plant waxes treated according to steps (a)-(g) of the present invention, but may be applied to any wax product. Any wax composition may preferably be bleached using ozone as illustrated below.

Using ozone as bleaching agent, wax is preferably melted in a hot aqueous solution, such as at temperatures above the melting temperature of wax selected from table 1. In one embodiment, the wax is melted in an aqueous solution having a temperature in the range 65-95°C, such as in the range 65-90°C, e.g. in the range 75-85°C, such as in the range 80-85°C, and preferably at 85°C. In one embodiment, the temperature is above 70°C, preferably above 80, 85, 90 or 95°C.

In one embodiment, wax is dispersed in the aqueous solution using emulsion technology: pH is increased, which effects soap formation of residual fatty acids in the wax, facilitating emulsion formation. In one embodiment, pH is increased above pH 9, such as increased to pH in the range 9-11, e.g. in the range 10-11. The pH adjustment of the solution may be performed by adding a base selected from the group consisting of sodium hydroxide, potassium hydroxide, calcium hydroxide, ammonium hydroxide, sodium carbonate and combinations thereof.

In a preferred embodiment wax is dispersed in an aqueous solution at a temperature of 75-90°C and pH 10 - 11. Stirring may be applied for optimal dispersion of the wax. Applicable stirrers may be selected from the group consisting of anchor stirrers, (multi-)blade stirrers, K-stirrers, paddle stirrers or any combinations thereof.

Ozone (O3) is introduced to the dispersed wax, such as by bubbling through the solution. In one embodiment, ozone is bubbled though the dispersed wax for 1, 2, 3, 4, 5 hours, or even up to 6 hours,
The dosage rate of ozone is circa 20g -400g per hour output from the ozone generator.

In a preferred embodiment, ozone is bubbled though the dispersed wax for 1-4 hours at a dosage rate of 10-20 g per hour, maintaining the temperature at 80-90°C, and stirring throughout.

Following the ozone treatment, pH is lowered to regenerate the fatty acids from their salts (soaps) and hence help break remaining emulsion. In one embodiment, pH is lowered to a value below pH 5, such as lowered to the range of pH 3-5, even lowered to a pH value between pH 3.5-4. The pH adjustment of the solution may be performed by adding an acid selected from the group consisting of phosphoric acid, hydrochloric acid, sulfuric acid, acetic acid. At low pH, the bleached wax rises to the top as a separate layer. The mix is preferably allowed to cool to ambient temperature and the wax may be recovered as a solid.

**According to step (i)** of the method of the present invention, the recovered (and optionally bleached) cuticular wax may be formulated into highly valuable products, such as in one embodiment formulated into cosmetics, medical additives, and personal care products; in another embodiment formulated into food ingredient, food coating, or even rodent bait; in yet another embodiment formulated into other surface coatings, e.g. fertilizer coating; in yet another embodiment formulated into lubricants, molding, polishes, leather tanning, textile waterproofing, technical moisture barrier, garments; in yet another embodiment formulated into adhesive, inks, paints, crayons, pencils; in yet another embodiment formulated into barbeque fire starter, matches, candle lights. In a preferred embodiment, the wax product is formulated into a cosmetics or other personal care product. Formulation may comprise process steps selected from the group consisting of granulation, flaking, pearling, extruding, milling, and fusing.

### II. Methods of analyzing products obtainable by the present invention

### II.i Total wax content

The total wax content of cereal straw can be determined gravimetrically as total lipids. Dried wax-containing cereal straw is milled and then extracted with hot / boiling chloroform. This is performed by either of two basic methods, where method 2 is preferred over method 1 if the bulk density of the plant material is high.
1. An accurately weighed portion of milled biomass (oven dry) is placed in a soxhlet thimble and then subjected to 12 hour extraction in a soxhlet extraction system, using the standard soxhlet methodology. After extraction, the thimble and remaining solid material are dried at 103°C, and the extracted wax is determined by mass difference compared to the start material. Or,
2. A portion of (accurately weighed) approximately 30g of dried, milled straw or other plant material, is placed into a 2L round bottomed flask and to this is added 1 Liter of chloroform. The flask is fitted with a reflux condenser and the material is refluxed in Chloroform for a minimum of 3 hours. After this time, the remaining solids are collected quantitatively, then dried (103°C) and weighed. The wax content is determined via the mass difference with respect to the input material.

### II.ii Wax composition

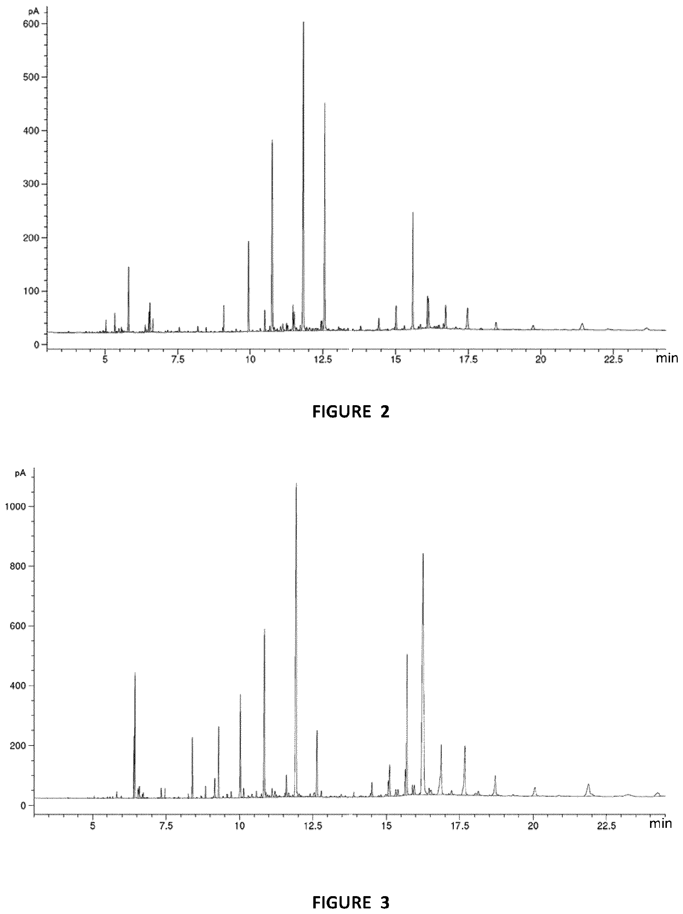

Wax composition is determined and monitored by Gas Chromatographic analysis ("GC"). Wax samples are dissolved in Chloroform (circa 0.1 and 0.2 g waxy solids per 25g Chloroform) and analyzed using Gas Chromatography (GC) on an Agilent GC5890 system equipped with a Gerstel CIS4 inlet controlled by a C505 controller. Samples (25 microlitre) introduced, using an ALS 7683 autosampler, onto a 15 metre long J&W 123-5711E DB-5HT (with 5% methyl silicone). The temperature ramp is ambient to max 350 C, with FID detection (375 C). Figure 2 shows a GC trace of chloroform extracted wheat straw wax (12 hour, Soxhlet method; 10 parts solvent to 1 part straw), which in this application is used as "standard wax" for reference in regards to purity. Peaks before 7.5 mins are fatty acids (mainly C16 and C18), peaks from 9.5- 12.5 mins are mainly alkanes, aldehydes, and fatty alcohol, peaks from 14- 17.5 mins are mainly sterols, beta-diketone, while those peaks after 18 mins are waxy esters.

### II.iii Wax purity

Purity of the wax product is determined by standard Soxhlet chloroform extraction method.: 5g of wax is placed in a pre-weighed extraction thimble and extract with Chloroform (250 mls reservoir) continuously for 12 hours (soxhlet procedure), then the thimble is dried and weighed for determining residual, non- waxy components. Results are then evaluated in combined with the GC results, as described above (which allows estimate of residual methyl ester content), to get a gauge on purity.

### II.iv Wax color

Wax color may be described according to the Gardner scale index. The Gardener color is determined by comparison of a test sample to a standard reference color, such as determined by the Lico Spectral Colorimeter (by Hach), e.g. Lico 690: The wax sample is melted and poured into a disposable 11 mm round cuvette to a depth of 2 cm. The outside glass of the cuvette should be wiped clean and it is important to ensure there are no air bubbles. The wax containing cuvette is then inserted into the cuvette compartment and the instrument performs a color measurement ranging from 0 to 18 accurate to one decimal place.

### II.v Wax melting point

Wax melting point may be measured by differential scanning calorimeter (DSC) measurement.

### III. Products obtainable by the present invention

The following aspects and embodiments concerning the products obtainable by the method of the present invention are not according to the invention and are present for illustration purposes only.

Disclosed is a refined wax product. The wax product comprises only a low amount residual capturing agent, such as less than 5%, 4%, 3%, 2%, preferably even less than 1%. The wax product further comprises only a low amount of residual ethanol, such as less than 3%, 2% or even less than 1%.

The texture of the dried wax product is hard and brittle the touch rather than soft and tacky.

The melting point (drop point) of the wax product is greater than 50°C, such as greater than 52, 54, 56, 58, or 60°C, depending the source of the wax. Preferably, the melting point is between 60-70°C, such as preferably 65-68°C for cereal straw wax.

For cereal straw waxes, the wax product preferably comprises less than 1% capturing agent, less than 1% alcohol, and has a melting point between 65-68°C.

The wax product may optional be bleached, obtaining a bleached wax having a Gardner color values of less than 18, such as a Garner color between 8-18, preferably between 8-10, such as even lower than 8 for cereal straw waxes.

### IV. Potential use of products obtainable by the present invention

The following aspects and embodiments concerning the potential use of the products obtainable by the method of the present invention are not according to the invention and are present for illustration purposes only.

Disclosed herein is a highly valuable plant wax product. In one embodiment, the wax product may be used as natural and "green" alternatives to waxes coming from the petrochemical industry. In a further preferred embodiment, the wax product can be substituted for the mineral oil-based waxes in numerous uses, including in cosmetics, medical additives, personal care products, food coating, food ingredient, lubricants, polishes, molding, adhesive, surface coatings, fertilizer coating, textile waterproofing, technical moisture barrier, leather tanning, inks, paints, garments, crayons, pencil, barbeque fire starter, candle lights, matches, rodent bait. In a preferred embodiment, waxes of the present invention - such as cereal straw waxes - are used in cosmetics.

### EXAMPLES

### Example 1: Refining of wheat straw wax

### 1.1 Dewaxing of wheat straw

After harvest of wheat grains from a wheat field in Vestsjaelland, Denmark, the remaining wheat straw was collected and transported to the treatment plant where it was treated in a hammer mill and subsequently sieved using an 8 mm sieve. The fraction passing the sieve was then processed in a dust separator for removal of fines material (15-20% of the straw mass was removed as fines material).

The fines were suspended in 55°C water, in a jacketed steel tank, at a loading of 85 kilograms straw (corresponding to circa 77.5 kgs straw dry matter) per 1400 liters of water. pH of the resultant slurry was adjusted to pH 5.4 using phosphoric acid and the temperature maintained at circa 55°C. The slurry was stirred using a Myers type dispersion mixer, to ensure good dispersion. 200 ml protease rich preparation (Promod 24L (110 casein units/ml), BioCatalysts Ltd, UK) and 100 ml pectinase rich enzyme preparation (Pectinase 974L (900 units/ml), BioCatalysts Ltd, UK) were added to disrupt the straw cuticle and help release wax. The slurry was circulated through a Fryma type wet-mill (fitted with a toothed colloid milling head) with a wide mill (> 2mm) head gap, meaning that the mill is acting as an effective pump mixer, rather than a true grinding mill, helping to ensure access of the enzymes to the straw cuticular surface. The wet-milling and stirring was applied during enzymatic treatment while maintaining pH and temperature profile as specified above. After about 1 hour, the temperature of the slurry was raised to 80°C to ensure all waxy components are in a molten state and to inactivate the enzymes; and the mixture was further stirred for about 10 minutes. This process slurry comprises molten wax together with water and water-soluble components and insoluble, solid, dewaxed material. A total of 2.9 kg wax was found to have been released into the water phase during the process (determined by standard chloroform Soxhlet extraction method).

### 1.2 Refining of wax from wheat straw using capturing agent and EtOH extraction and wash

The process slurry from the aqueous, enzymatic dewaxing process described in example 1.1 was centrifuged (using a decanter), yielding a liquid "top-phase" (liquid fraction comprising wax) and a dewaxed fiber phase (insoluble fraction: bulk fiber residuals from the dewaxing step). This was performed at about 80°C and pH circa 5-6. The liquid fraction comprised dissolved water-soluble plant material, some "solid fines", and the dislodged wax in the form of molten suspension and emulsion droplets. Maintaining the temperature at about 80°C, the capturing agent: rapeseed methyl ester, was rapidly stirred into the aqueous phase at a proportion of 1 part capturing agent to 40 parts aqueous phase. After about 60 minutes, still at a temperature of about 80°C, the mixture was centrifuged (8000rmp) using a GEA model SC 35-01-177 separator (disc stack, 3-phase, with self-cleaning bowl) in order to separate off an "enriched top phase" (capture fraction). This enriched top-phase (capture fraction) contained the capturing agent, the waxy components from the straw and a small amount of residual water and other partially soluble components (soluble or suspended in the capturing agent and in the overall blend). In order to remove water, the enriched top-phase was introduced to an evaporating chamber (750 liter volume sealed tank, fitted with exhaust and mechanical stirring), in which it was stirred at a temperature of 70-80°C, until the temperature was seen to rise, indicating absence of residual water. The "dewatered top-phase" was then filtered through a 200-300 µm mesh medium, removing solid particles. This was done using a filter band (Model / type UF 1000, supplied by Union Oiltech ApS, Svendborg, Denmark), on which a polypropylene porous filter cloth mesh on a roll was mounted, continuously rolled out as required, resulting in a liquid filtrate mainly comprising waxy components extracted from the straw dissolved and dispersed in the capturing agent. The filtrate was collected and then placed in a distillation vessel (a 750 liter stainless steel tank fitted with mechanical stirring and vacuum facility), in which the capturing agent was removed via vacuum distillation at 180°C, and distillation was considered complete when the temperature started to ramp up. The **crude wax** was recovered from the distillation vessel (discharged as a warm melt) and introduced to an excess of 96% ethanol (1 part wax to 6 parts ethanol). The warm crude wax suspended in the ethanol (now warmed to about 30-50 °C by the wax) was stirred (manually, with a steel rod) to ensure adequate mixing, then left for full recrystallization of the wax in the ethanol as it cooled to ambient temperature (15°C). The solution comprising **recrystallized wax** was then filtered using a second filter band set up (Model / type UF 1000, supplied by Union Oiltech ApS, Svendborg, Denmark, fitted with a 200-300 µm mesh filter cloth), retaining the crystalized wax. The wax was then washed using 10 L of further cold (ambient temperature, circa 15°C) ethanol to remove most of the residual capturing agent (methyl esters). The washed wax was then melted and heated in an oven at 90°C overnight to drive off excess ethanol.

This resulted in a non-bleached wax containing less than 3% of residual methyl ester capturing agent as determined by GC monitoring of methyl ester peaks against major wax component peaks (Figure 3). The residual ethanol content was measured to be less than 1%. Standard chloroform Soxhlet extraction method combined with the GC data, further showed that the wax product was at least 95% pure. Differential scanning calorimeter (DSC) measurement showed a peak melting point for the wax at 65°C. The wax was hard and brittle to the touch at room temperature.

### 1.3 Refining of wax from wheat straw using capturing agent without EtOH wash

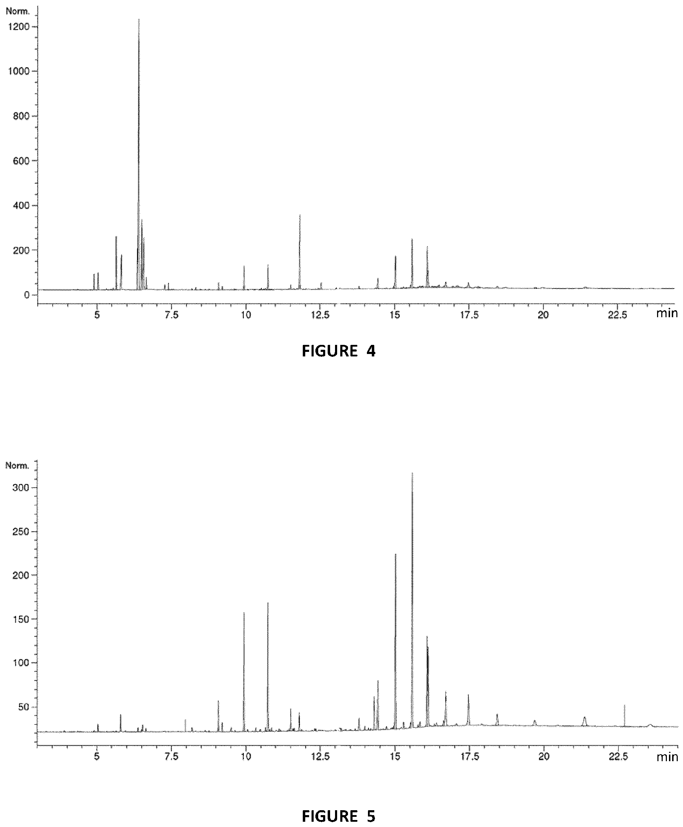

Wax was prepared as in examples 1.1 and 1.2, except that the **recrystallized wax** was not further washed with cold ethanol, but simply filtered on the filter band to drain off excess ethanol from the recrystallization; then melted and heated in a 90°C oven overnight to drive off excess ethanol. This resulted in a non-bleached wax that contained 20-30 % residual methyl ester capturing agent, as determined by GC monitoring (Figure 4), and the peak melt point of the wax was found to be around 50°C (as determined via DSC). The wax was soft and "tacky" to the touch at room temperature, rather than hard and brittle as in example 1.2.

### 1.4 Refining of wax from wheat straw using capturing agent and hot EtOH extraction

Wax was prepared as in examples 1.1 and 1.2, except that the **crude wax** melt emanating from the distillation vessel was introduced to an excess of 96% ethanol (1 part wax discharge to 6 parts ethanol) in a steel vessel fitted with stirrer and heating jacket. The temperature of the mix was raised to 75°C within the vessel, with continuous stirring, until the wax had melted and re-dissolved and re-dispersed within the hot ethanol. The hot mix was then transferred to an open cooling tank and the temperature was allowed to drop to ambient temperature (circa 15°C), and left for 1 hour at this temperature. The waxy material was seen to recrystallize and precipitate in the now cold ethanol. The solid crystailized wax was recovered via filtration using a second filter band set up (Model / type UF 1000, supplied by Union Oiltech ApS, Svendborg, Denmark, fitted with a 200-300 micron mesh filter cloth) retaining the crystalized wax. The wax was finally washed using 5 L of further cold (ambient temperature, circa 15°C) ethanol per kg of precipitated wax, to remove most of the residual capturing agent methyl esters. The wet ethanolic waxy cake resulting was manually pressed to remove a proportion of the ethanol through the filter after which the waxy cake was then melted and heated in an oven at 90°C overnight to drive off excess ethanol.

This resulted in a non-bleached wax containing less than 1% of residual methyl ester CA as determined via GC monitoring of methyl ester peaks against major wax component peaks (Figure 5). The residual ethanol content was also measured to be less than 1%. DSC measurement showed a peak melting point for the wax at 68°C. The wax was hard and brittle to the touch at room temperature.

Table 4 provides a comparison of the properties of the waxes obtained by the different methods described above.

**Table 4. Wax properties**

| **Method** | **Residual methyl ester CA** | **Residual EtOH** | **Purity*** | **Melting** point | **Texture (at room temperature)** |
|---|---|---|---|---|---|
| Capturing agent + EtOH extraction + cold EtOH wash | Less than 3% | Less than 1 % | 95-97 | 65°C | Hard and brittle |
| Capturing agent + EtOH extraction, (no cold EtOH wash) | 20-30% | Less than 1 % | 70-80 | 50°C | Soft and tacky |
| Capturing agent + hot EtOH extraction + cold EtOH wash | Less than 1% | Less than 1% | 98-99 | 68°C | Hard and brittle |

| | | | | | |
|---|---|---|---|---|---|
| *purity determined by standard chloroform Soxhlet extraction method | | | | | |

### Example 2: Traditional wax refining methods

### 2.1 Recovering wax by skimming

Dewaxing of wheat straw was performed as described in example 1.1, except that the wax content of the process slurry from the aqueous, enzymatic dewaxing process was increased by centrifuging the slurry (using a decanter), yielding a liquid "top-phase" (liquid fraction comprising wax) and a fiber phase (insoluble fraction: bulk fiber residuals from the dewaxing step), where the liquid top-phase was then reused as bulk process liquor for a second batch for dewaxing. Such three consecutive batch runs were performed. The dry matter contents of the decanter liquid top-phase of the three runs were determined by standard method and found to be the following: Run 1: 1.03%, Run 2: 1.76%, and Run 3: 3.30%. This confirmed that additional compounds (incl. wax) were indeed extracted with each additional run.

1980 g of the decanter top-phase liquid of run 3 was carefully and quantitatively dried down (80°C oven). A total of 64.75 g of dry matter was obtained (confirming the 3.30% DM of run 3). 63.52g of this dry substance was then extracted with standard chloroform Soxhlet extraction method to determine the total extractable waxy substance content. This yielded 5.73 g waxy material after CHCl3 flashing off. The chloroform extractable wax content of the decanter top-phase liquid of run 3 was thereby determined to be 0.29 %.

The wax product obtainable by standard skimming was determined as follows: 121 liters of decanter top-phase liquid of run 3 in a rendering vessel. The pH of the mix was adjusted to 3.5 via addition of phosphoric acid. Samples were then periodically scraped / skimmed from the surface as follows. In each case, a visible skin with "fatty consistency" was observed and removed. The operation was performed 8 times over 2 days until no more waxy layer was observed to come to the surface. All collections were pooled, dried (80°C oven, overnight) and weighed after drying. The dry weight of the pooled skimmed layer was 318g. To determine the actual wax content of this layer, standard chloroform Soxhlet extraction method using boiling chloroform was used (2 hour reflux in 5 x excess solvent). The CHCl3 and solubles were isolated via filtration and the solvent then flashed off, the waxy residues being finally weighed and quantified: the total chloroform extracted wax was 180 g.

As reported above, the initial analysis of the decanter top-phase liquid of run 3 showed the chloroform extractable wax content to be 0.29%. Hence, the total amount of wax in the 121 liters of decanter top-phase liquid is around 350 g. Method of skimming therefore appears to yield only 51% of the available wax at merely 57% purity. The skimmed wax product is not only crude in make-up and requires substantial further extraction, the method is also quite time consuming (1-2 days per batch) and is not considered as a realistic commercial method for wheat straw wax-refining

### Example 3: Wax bleaching

### 3.1 Bleaching using ozone

The cleaned wax (1kg dose), after ethanol evaporation (example 1.2), was added to a 10 liter jacketed vessel containing hot water (9 liters) at temperature 85°C, with rapid stirring using a multi-bladed stirrer. The wax was allowed to melt and was dispersed using emulsion technology by raising the pH to circa 10.5 via addition of 3 M NaOH solution. Ozone (O3) was introduced (from an ozone generator) to the bottom of the vessel via a tube with multiple exit holes for increased bubble formation, and allowed to bubble through the liquid suspension for 4 hours, maintaining temperature and stirring throughout. The dosage rate of ozone was circa 20g per hour output from the ozone generator. At the end of the treatment period, pH was lowered to a value between 3.5-4 using phosphoric acid (maintaining temperature and stirring), to help break remaining emulsion. The liquid suspension was rapidly discharged from the vessel to a separate container, at which point the melted, bleached wax raised to the top as a separate layer. The mix was allowed to cool to ambient temperature and the wax disc was removed as a solid. Residual water was dried off by wiping with absorbent paper.

The bleached wax was a light yellow color, as opposed to the dark brown color of the feed wax to the bleaching reactor. The light yellow shade was very similar to that standardly seen for carnauba wax. Using the Gardner color index (Table 2), the bleached wheat straw wax was visually determined to have a Gardner value around 8-10.

### 3.2 Bleaching using hydrogen peroxide

The methodology for bleaching of beeswax using hydrogen peroxide was adapted: Wax was emulsified as described for ozone in example 2.1. 35 grams of 30% H2O2 was added per 100 grams of wax as the bleaching agent, maintaining pH at 10.5, and temperature at 80°C, for 5 hours and for 24 hours (two separate experiments). To recover the wax, the pH was dropped rapidly to 3.5 using phosphoric acid, maintaining stirring and temperature at 80°C, after which stirring was stopped and the wax phase rapidly separated to the top of the beaker as a distinct layer. On cooling, this top layer was removed as a solid wax disc. Only very partial lightening of the wax was observed, even after 24 hours treatment. The wax mass remained a brown color, visually determined to have a Gardner value around 18.

### 3.3 Bleaching using chlorine

Wax was added to hot water (1:10 ratio on mass basis), the mixture heated to 85°C with rapid stirring. pH was reduced to 4.5 using acetic acid, with 10g sodium chlorite per 100 g wax being added to the mix and bleaching commenced for 1 hour. Transition of the wax from dark brown to light yellow was observed (Gardner value around 8-10). The method therefore works, but chlorine bleaching is not desirable to most downstream processing and commercial use of the wax.

### 3.4 Bleaching using ozone, on wax dissolved in chloroform

The crude wax was dissolved in warm chloroform (40°C) at 1:10 by mass ratio. Ozone was bubbled through 1 liter of the mixture (rate of 10g per hour from an ozone generator). The material visibly turned from dark brown to light yellow (Gardner value around 8-10) within 40 minutes of commencement. However, ozone reacts with chloroform to liberate active chlorine species, and it is likely that the bleaching was effected by these chlorine derived oxidants, alongside the ozone. Therefore, although effective bleaching was achieved, the "indirect" use of chlorine, and of chloroform, is likely not desirable to most downstream processing and commercial use of the wax.

## Claims

1. A method of extracting and refining cuticular wax from plant material, said method comprising the steps of
a. providing plant material comprising cuticular wax,
b. disassociating cuticular wax from said plant material provided in step (a), thereby obtaining a sample comprising plant derived cuticular wax and dewaxed plant material in an aqueous suspension,
c. solubilizing said plant derived cuticular wax by increasing the temperature of the sample obtained in step (b) to a temperature greater than the melting point of said plant derived cuticular wax,
d. separating the suspension obtained in step (c) into a solid fraction and a liquid fraction, wherein said liquid fraction comprises melted plant derived cuticular wax,
e. mixing said liquid fraction from step (d) with a capturing agent,
f. separating the mixture obtained in step (e) into an aqueous fraction and a capture fraction, wherein said capture faction comprises said capturing agent and said plant derived cuticular wax,
g. recovering said plant derived cuticular wax from said capture fraction from step (f);
wherein said capturing agent is **characterized by** (i) being a non-water miscible liquid in which said plant derived cuticular wax is soluble, (ii) having a boiling point above 85°C at ambient pressure, and (iii) being a C1-C4 alcohol-miscible liquid.

2. The method of extracting and refining cuticular wax from plant material according to claim 1,
wherein the capturing agent is a plant oil, such as being selected from the group consisting of optionally purified plant oils, modified plant oil, and derivative(s) of plant oil.

3. The method of extracting and refining cuticular wax from plant material according to any one of claims 1 or 2, wherein the capturing agent is a methyl ester, such as fatty acid methyl esters, such as C14-C18 methyl ester preparations, e.g. rapeseed methyl ester.

4. The method of extracting and refining cuticular wax from plant material according to any one of claims 1-3, wherein plant derived cuticular wax is recovered in step (g) by
g1. removing capturing agent from the cuticular wax by applying conditions where the capturing agent is volatile, while the waxy components are not, such as vacuum distillation.

5. The method of extracting and refining cuticular wax from plant material according to claim 4, wherein residual capturing agent is removed from the cuticular wax by the steps of
g2. suspending or dissolving the wax in alcohol,
g3. cooling to a temperature which leads to the precipitation of the wax, whilst the capturing agent remains in solution
wherein said alcohol is a C1-C4 alcohol, such as selected from methanol, ethanol, propanol, iso-propanol, butanol, iso-butanol, tert-butanol, or a combination hereof.

6. The method of extracting and refining cuticular wax from plant material according to any one of claims 1-5, wherein the disassociation of cuticular wax from plant material in step (b) is done by a method comprising the step of
i. subjecting said plant material to a dry mechanical treatment,
ii. optionally fractionating the material obtained in step (i) by size,
iii. suspending the material obtained in step (i) or a selected fraction obtained in step (ii) in an aqueous liquid comprising one or more protease and/or pectinase enzymes,
iv. optionally subjecting the mixture obtained in step (iii) to wet mechanical treatment.

7. The method of extracting and refining cuticular wax from plant material according to any one of claims 1-6, wherein said plant material originates from agricultural crops, such as cereals, sugar cane, palm trees, and high energy grasses.

8. The method of extracting and refining cuticular wax from plant material according to any one of claims 1-7, wherein said plant material is cereal straw.

9. The method of extracting and refining cuticular wax from plant material according to any one of claims 1-8, wherein said cereal straw is selected from wheat, rye, barley, oats, sorghum, rice and triticale.

10. The method of extracting and refining cuticular wax from plant material according to any one of claims 1-9, further comprising the step of
h. bleaching said plant derived cuticular wax recovered in step (g).

11. The method of extracting and refining cuticular wax from plant material according to claim 10, wherein bleaching is achieved by exposing said wax to a bleaching agent selected from the group consisting of oxidants, chlorine, hypochlorite, chloramine, chlorine gas, chlorine dioxide, sodium percarbonate, sodium perborate, molecular oxygen, ozone, peroxoacetic acid, benzoyl peroxide, and bromate; preferably ozone.

12. The method of extracting and refining cuticular wax from plant material according to any one of claims 1-9, further comprising the step of
i. formulating said plant derived cuticular wax recovered in step (g) or said bleached plant derived cuticular wax obtained in step (h) into valuable products selected from the group cosmetics, medical additives, personal care products, food ingredient, food coating, rodent bait, surface coatings, fertilizer coating, lubricants, molding, polishes, leather tanning, textile waterproofing, technical moisture barrier, garments, adhesive, inks, paints, crayons, pencils, barbeque fire starter, matches, candle lights.

## Patentansprüche

1. Verfahren zum Extrahieren und Raffinieren von Cuticula-Wachs aus Pflanzenmaterial, wobei das Verfahren die folgenden Schritte umfasst
a. Bereitstellen von Pflanzenmaterial, das Cuticula-Wachs umfasst,
b. Abtrennen des Cuticula-Wachses von dem in Schritt (a) bereitgestellten Pflanzenmaterial, wodurch eine Probe erhalten wird, die aus einer Pflanze gewonnenes Cuticula-Wachs und entwachstes Pflanzenmaterial in einer wässrigen Suspension umfasst,
c. Solubilisieren des aus einer Pflanze gewonnenen Cuticula-Wachses durch Erhöhen der Temperatur der in Schritt (b) erhaltenen Probe auf eine Temperatur, die größer ist als der Schmelzpunkt des aus einer Pflanze gewonnenen Cuticula-Wachses,
d. Trennen der in Schritt (c) erhaltenen Suspension in eine feste Fraktion und eine flüssige Fraktion, wobei die flüssige Fraktion geschmolzenes, aus einer Pflanze gewonnenes Cuticula-Wachs umfasst,
e. Mischen der genannten flüssigen Fraktion aus Schritt (d) mit einem Fängermittel,
f. Trennen der in Schritt (e) erhaltenen Mischung in eine wässrige Fraktion und eine Fangfraktion, wobei die Fangfraktion das Fängermittel und das aus einer Pflanze gewonnene Cuticula-Wachs umfasst,
g. Absammeln des aus einer Pflanze gewonnenem Cuticula-Wachses aus der genannten Fangfraktion aus Schritt (f);
wobei das Fängermittel **dadurch gekennzeichnet ist, dass** es (i) eine nicht mit Wasser mischbare Flüssigkeit ist, in der das aus einer Pflanze gewonnene Cuticula-Wachs löslich ist, (ii) einen Siedepunkt von über 85 °C bei Umgebungsdruck aufweist und (iii) eine mit C1-C4-Alkoholen mischbare Flüssigkeit ist.

2. Verfahren zum Extrahieren und Raffinieren von Cuticula-Wachs aus Pflanzenmaterial nach Anspruch 1, wobei es sich bei dem Fängermittel um ein Pflanzenöl handelt, beispielsweise ausgewählt aus der Gruppe bestehend aus optional gereinigten Pflanzenölen, modifiziertem Pflanzenöl und Derivaten von Pflanzenöl.

3. Verfahren zum Extrahieren und Raffinieren von Cuticula-Wachs aus Pflanzenmaterial nach einem der Ansprüche 1 oder 2, wobei es sich bei dem Fängermittel um einen Methylester handelt, beispielsweise um Fettsäuremethylester, etwa C14-C18-Methylesterpräparate, z. B. Rapsölmethylester.

4. Verfahren zum Extrahieren und Raffinieren von Cuticula-Wachs aus Pflanzenmaterial nach einem der Ansprüche 1-3, wobei das aus einer Pflanze gewonnene Cuticula-Wachs in Schritt (g) abgesammelt wird durch
g1. Entfernen des Fängermittels aus dem Cuticula-Wachs durch Anwenden von Bedingungen, bei denen das Fängermittel flüchtig ist, die wachsartigen Bestandteile jedoch nicht, wie z. B. Vakuumdestillation.

5. Verfahren zum Extrahieren und Raffinieren von Cuticula-Wachs aus Pflanzenmaterial nach Anspruch 4, wobei restliches Fängermittel durch die folgenden Schritte aus dem Cuticula-Wachs entfernt wird
g2. Suspendieren oder Auflösen des Wachses in Alkohol,
g3. Abkühlen auf eine Temperatur, die zur Ausfällung des Wachses führt, während das Fängermittel in Lösung bleibt,
wobei der Alkohol ein C1-C4-Alkohol ist, wie etwa ausgewählt aus Methanol, Ethanol, Propanol, Isopropanol, Butanol, Isobutanol, tert-Butanol oder einer Kombination davon.

6. Verfahren zum Extrahieren und Raffinieren von Cuticula-Wachs aus Pflanzenmaterial nach einem der Ansprüche 1-5, wobei das Abtrennen des Cuticula-Wachses vom Pflanzenmaterial in Schritt (b) durch ein Verfahren erfolgt, das den folgenden Schritt umfasst
i. Unterziehen des genannten Pflanzenmaterials einer trockenmechanischen Behandlung,
ii. optionales Fraktionieren des in Schritt (i) erhaltenen Materials nach Größe,
iii. Suspendieren des in Schritt (i) erhaltenen Materials oder einer in Schritt (ii) erhaltenen ausgewählten Fraktion in einer wässrigen Flüssigkeit, die eine oder mehrere Proteasen und/oder Pektinase-Enzyme umfasst,
iv. optionales Unterziehen der in Schritt (iii) erhaltenen Mischung einer nassmechanischen Behandlung.

7. Verfahren zum Extrahieren und Raffinieren von Cuticula-Wachs aus Pflanzenmaterial nach einem der Ansprüche 1-6, wobei das Pflanzenmaterial aus landwirtschaftlichen Nutzpflanzen wie Getreide, Zuckerrohr, Palmen und energiereichen Gräsern stammt.

8. Verfahren zum Extrahieren und Raffinieren von Cuticula-Wachs aus Pflanzenmaterial nach einem der Ansprüche 1-7, wobei das Pflanzenmaterial Getreidestroh ist.

9. Verfahren zum Extrahieren und Raffinieren von Cuticula-Wachs aus Pflanzenmaterial nach einem der Ansprüche 1-8, wobei es das Getreidestroh ausgewählt ist aus Weizen, Roggen, Gerste, Hafer, Sorghum, Reis und Triticale.

10. Verfahren zum Extrahieren und Raffinieren von Cuticula-Wachs aus Pflanzenmaterial nach einem der Ansprüche 1-9, das weiter den folgenden Schritt umfasst
h. Bleichen des aus einer Pflanze gewonnenen Cuticula-Wachses, das in Schritt (g) abgesammelt wurde.

11. Verfahren zum Extrahieren und Raffinieren von Cuticula-Wachs aus Pflanzenmaterial nach Anspruch 10, wobei das Bleichen durch Aussetzen des Wachses gegenüber einem Bleichmittel erreicht wird, ausgewählt aus der Gruppe bestehend aus Oxidationsmitteln, Chlor, Hypochlorit, Chloramin, Chlorgas, Chlordioxid, Natriumpercarbonat, Natriumperborat, molekularem Sauerstoff, Ozon, Peroxyessigsäure, Benzoylperoxid und Bromat; vorzugsweise Ozon.

12. Verfahren zum Extrahieren und Raffinieren von Cuticula-Wachs aus Pflanzenmaterial nach einem der Ansprüche 1-9, das weiter den folgenden Schritt umfasst
i. Formulieren des in Schritt (g) abgesammelten, aus einer Pflanze gewonnenen Cuticula-Wachses oder des in Schritt (h) erhaltenen, gebleichten, aus einer Pflanze gewonnenen Cuticula-Wachses zu wertvollen Produkten, ausgewählt aus der Gruppe Kosmetika, medizinische Zusatzstoffe, Körperpflegeprodukte, Lebensmittelzutaten, Lebensmittelbeschichtungen, Nagetierköder, Oberflächenbeschichtungen, Düngemittelbeschichtungen, Schmiermittel, Formteile, Polituren, Ledergerbung, Textilimprägnierung, technische Feuchtigkeitsbarrieren, Kleidungsstücke, Klebstoffe, Tinten, Farben, Buntstifte, Bleistifte, Grillanzünder, Streichhölzer, Kerzenlichter.

## Revendications

1. Procédé d'extraction et de raffinage de cire cuticulaire à partir d'un matériau végétal, ledit procédé comprenant les étapes consistant à
a. fournir un matériau végétal comprenant de la cire cuticulaire,
b. dissocier de la cire cuticulaire dudit matériau végétal fourni à l'étape (a), obtenant ainsi un échantillon comprenant de la cire cuticulaire d'origine végétale et du matériau végétal décirée dans une suspension aqueuse,
c. solubiliser ladite cire cuticulaire d'origine végétale en augmentant la température de l'échantillon obtenu à l'étape (b) jusqu'à une température supérieure au point de fusion de ladite cire cuticulaire d'origine végétale,
d. séparer la suspension obtenue à l'étape (c) en une fraction solide et une fraction liquide, dans lequel ladite fraction liquide comprend de la cire cuticulaire d'origine végétale fondue,
e. mélanger ladite fraction liquide de l'étape (d) avec un agent de capture,
f. séparer le mélange obtenu à l'étape (e) en une fraction aqueuse et une fraction de capture, dans lequel ladite fraction de capture comprend ledit agent de capture et ladite cire cuticulaire d'origine végétale,
g. récupérer ladite cire cuticulaire d'origine végétale à partir de ladite fraction de capture de l'étape (f) ;
dans lequel ledit agent de capture est **caractérisé en ce qu'**il (i) est un liquide non miscible à l'eau dans lequel ladite cire cuticulaire d'origine végétale est soluble, (ii) présente un point d'ébullition supérieur à 85 °C à pression ambiante et (iii) est un liquide miscible à l'alcool en C1-C4.

2. Procédé d'extraction et de raffinage de cire cuticulaire à partir de matériau végétal selon la revendication 1, dans lequel l'agent de capture est une huile végétale, telle que sélectionnés à partir du groupe constitué facultativement d'huiles végétales purifiées, d'huiles végétales modifiées et d'un ou plusieurs dérivés d'huile végétale.

3. Procédé d'extraction et de raffinage de cire cuticulaire à partir de matériau végétal selon l'une quelconque des revendications 1 ou 2, dans lequel l'agent de capture est un ester méthylique, tel que des esters méthyliques d'acides gras, tels que des préparations d'esters méthyliques en C14-C18, par ex. de l'ester méthylique de colza.

4. Procédé d'extraction et de raffinage de cire cuticulaire à partir de matériau végétal selon l'une quelconque des revendications 1-3, dans lequel la cire cuticulaire d'origine végétale est récupérée à l'étape (g) par
g1. élimination d'agent de capture de la cire cuticulaire en appliquant des conditions où l'agent de capture est volatil, tandis que les composants cireux ne le sont pas, telle qu'une distillation sous vide.

5. Procédé d'extraction et de raffinage de cire cuticulaire à partir de matériau végétal selon la revendication 4, dans lequel l'agent de capture résiduel est retiré de la cire cuticulaire par les étapes de
g2. suspension ou dissolution de la cire dans de l'alcool,
g3. refroidissement à une température qui entraîne la précipitation de la cire, tandis que l'agent de capture reste en solution
dans lequel ledit alcool est un alcool en C1-C4, tel que sélectionné parmi le méthanol, l'éthanol, le propanol, l'iso-propanol, le butanol, l'iso-butanol, le tert-butanol ou une combinaison de ceux-ci.

6. Procédé d'extraction et de raffinage de cire cuticulaire à partir de matériau végétal selon l'une quelconque des revendications 1-5, dans lequel la dissociation de cire cuticulaire à partir de matériau végétal à l'étape (b) est réalisée par un procédé comprenant l'étape de
i. soumission dudit matériau végétal à un traitement mécanique à sec,
ii. facultativement le fractionnement du matériau obtenu à l'étape (i) par taille,
iii. la mise en suspension du matériau obtenu à l'étape (i) ou une fraction sélectionnée obtenue à l'étape (ii) dans un liquide aqueux comprenant une ou plusieurs protéases et/ou enzymes pectinases,
iv. facultativement la soumission du mélange obtenu à l'étape (iii) à un traitement mécanique humide.

7. Procédé d'extraction et de raffinage de cire cuticulaire à partir de matériau végétal selon l'une quelconque des revendications 1-6, dans lequel ledit matériau végétal provient de cultures agricoles, telles que des céréales, de la canne à sucre, des palmiers et des graminées à haute énergie.

8. Procédé d'extraction et de raffinage de cire cuticulaire à partir de matériau végétal selon l'une quelconque des revendications 1-7, dans lequel ledit matériau végétal est de la paille de céréales.

9. Procédé d'extraction et de raffinage de cire cuticulaire à partir de matériau végétal selon l'une quelconque des revendications 1-8, dans lequel ladite paille de céréales est sélectionnée parmi le blé, le seigle, l'orge, l'avoine, le sorgho, le riz et le triticale.

10. Procédé d'extraction et de raffinage de cire cuticulaire à partir de matériau végétal selon l'une quelconque des revendications 1-9, comprenant en outre l'étape de
h. blanchiment de ladite cire cuticulaire d'origine végétale récupérée à l'étape (g).

11. Procédé d'extraction et de raffinage de cire cuticulaire à partir de matériau végétal selon la revendication 10, dans lequel le blanchiment est accompli en exposant ladite cire à un agent de blanchiment sélectionné à partir du groupe constitué d'oxydants, chlore, hypochlorite, chloramine, chlore gazeux, dioxyde de chlore, percarbonate de sodium, perborate de sodium, oxygène moléculaire, ozone, acide peroxyacétique, peroxyde de benzoyle et bromate ; de préférence ozone.

12. Procédé d'extraction et de raffinage de cire cuticulaire à partir de matériau végétal selon l'une quelconque des revendications 1-9, comprenant en outre l'étape de
i. formulation de ladite cire cuticulaire d'origine végétale récupérée à l'étape (g) ou ladite cire cuticulaire d'origine végétale blanchie obtenue à l'étape (h) en produits de valeur sélectionnés parmi le groupe de cosmétiques, additifs médicaux, produits de soins personnels, ingrédients alimentaires, enrobages alimentaires, appâts pour rongeurs, revêtements de surface, enrobages d'engrais, lubrifiants, moulages, cirages, tannage du cuir, imperméabilisation des textiles, barrières techniques contre l'humidité, vêtements, adhésifs, encres, peintures, craies grasses, crayons, allume-feux pour barbecue, allumettes, bougies.
